# EUROPEAN PATENT SPECIFICATION

(11) **EP 1 314 157 B1**
(45) Date of publication and mention of the grant of the patent: **30.11.2005**
(21) Application number: 01976127.9
(22) Date of filing: 13.08.2001
(51) Int. Cl.: G11B 20/00, G11B 23/28

(54) **COPY PROTECTION OF OPTICAL DISCS COMPRISING A CHIP**
KOPIERSCHUTZ VON OPTISCHEN PLATTEN MIT EINEM CHIP
DISPOSITIF DE PROTECTION CONTRE LA COPIE DE DISQUES OPTIQUES COMPORTANT UNE PUCE

(30) Priority: 24.08.2000 EP 00202976; 19.04.2001 EP 01201417
(43) Date of publication of application: 28.05.2003
(73) Proprietor: Koninklijke Philips Electronics N.V., 5621 BA Eindhoven (NL)
(72) Inventor: KAHLMAN, Josephus, A., H., M., NL-5656 AA Eindhoven (NL); HART, Cornelis, M., NL-5656 AA Eindhoven (NL)
(74) Representative: Deguelle, Wilhelmus H. G.
(86) International application number: PCT/EP2001/009628
(87) International publication number: WO 2002/017316

(56) References cited:
- EP-A- 0 479 461
- EP-A- 0 809 245
- EP-A- 0 849 734
- DE-A- 19 506 313
- US-A- 5 652 838
- US-A- 5 790 489
- PATENT ABSTRACTS OF JAPAN vol. 007, no. 256 (P-236), 15 November 1983 (1983-11-15) & JP 58 139285 A (TATEISHI DENKI KK), 18 August 1983 (1983-08-18)

## Description

The invention relates to a record carrier having a first area for storing information, and a second area, the second area comprising an integrated circuit.

The invention also relates to a system for protecting information on the record carrier, a device for reading the record carrier, and an integrated circuit.

US 5,790,489 discloses a compact disk with an apparatus track 200. The apparatus track comprises a processor 201, a storage element 207, a charging array 203 and a transmission array 205. A laser beam 309 originating from a CD reader/writer delivers energy to the charging array which charges the storage element. This stored energy is used for powering the processor. The transmission array, which can be an LED, a laser diode or an LCD reflector, is used for transmitting data to and/or receiving data from the CD reader/writer.

It is an object of the invention to realize a simple and inexpensive copy protection of record carriers, for example, optical record carriers.

According to the invention, the record carrier is therefore characterized in that transmitting means for transmitting additional information and receiving means for receiving a power supply signal for power supply of the integrated circuit are integrated in the integrated circuit, the receiving means comprising a light-sensitive sensor, for example, a photodiode, and in that the integrated circuit comprises means for generating a first communication channel operating at a first frequency, and means for generating a second communication channel operating at a second frequency, the first frequency being substantially unequal to the second frequency. By integrating the transmitting means and receiving means in an integrated circuit (also referred to as chip), it is possible to manufacture the record carrier in a relatively inexpensive manner because no separate connections need to be established between the different components of the integrated circuit. By incorporating a photodiode in the integrated circuit, it will be possible to supply power to this circuit by means of an externally applied power supply signal. This measure also provides the possibility of manufacturing a relatively inexpensive integrated circuit because it is not necessary to provide a separate power supply.

Since the communication channels are substantially separated in frequency, for example, because the first frequency is in an optical frequency range (for example, realized by means of a LED and a light-sensitive sensor, for example, a photodiode; for example, at a frequency of 375 THz at a wavelength of 800 nm), and the second frequency is in a radio frequency range (for example, realized by means of a radio receiver and a radio transmitter; for example, in a frequency range of 0.5-2 GHz), the communication signals are decoupled so that disturbances can be reduced or avoided. Since the communication signals are decoupled, it is also possible to realize the transmitter and the receiver in a simpler manner.

The inventors have recognized that it is possible to equip an integrated circuit with a light-sensitive sensor, for example, a photodiode without affecting the operation of the integrated circuit. In fact, it is known that when light is incident on an integrated circuit, parasitic currents are produced which may influence the operation of the integrated circuit. This particularly applies if the integrated circuit comprises a memory and/or a processor. Suitable materials for forming the integrated circuit are GaAs, SiGe or SiEr. Those skilled in the art will therefore try to prevent that light is incident on an integrated circuit comprising a memory and/or a processor, let alone that they would incorporate a light-sensitive sensor.

Another embodiment of the record carrier according to the invention is characterized in that the receiving means are also adapted to receive additional information. It is possible to modulate the power supply signal in such a way that this signal may serve both for the supply of power to the integrated circuit and for transmitting additional information, for example, for copy protection measures.

Another embodiment of the record carrier according to the invention is characterized in that the integrated circuit is contactlessly readable. Since the integrated circuit is contactlessly readable, it is possible to realize the system for protecting information on a record carrier, comprising a device and the record carrier, in a more flexible way. In fact, such a system provides more freedom for positioning the transmitting means and the receiving means which are present in the device and on the record carrier. Moreover, such a system also provides the possibility of fixing the integrated circuit to the record carrier without this record carrier having contacts for this purpose, as is the case, for example, in a capacitive coupling between the integrated circuit and a reading device, in which the record carrier forms part of the capacitive coupling.

A further embodiment of the record carrier according to the invention is characterized in that the additional information comprises a key for scrambling and/or descrambling the information. The key makes it possible to scramble the information stored in the first area on the record carrier and descramble the information stored in the first area. It is possible in the first communication channel, for example, to modulate the key information which is present in the additional information on the signal in an optical frequency range (for example, realized by means of a LED and a light-sensitive sensor) so as to realize copy protection for protecting the information stored in the first area on the record carrier. Since the transfer of energy to the integrated circuit is realized by means of the LED/light-sensitive sensor combination, it is no longer necessary to incorporate additional power supply means (for example, a battery) on the record carrier or on the integrated circuit.

The invention further relates, inter alia, to a system for protecting information on a record carrier, the system comprising a device for reading and/or writing the information on the record carrier, and the record carrier, the device and the record carrier comprising transmitting means and receiving means for transmitting and receiving additional information, and is characterized in that the transmitting means and receiving means of the record carrier are integrated in an integrated circuit.

An embodiment of this system according to the invention is characterized in that the integrated circuit comprises means for generating a first communication channel operating at a first frequency, and means for generating a second communication channel operating at a second frequency, the first frequency being unequal to the second frequency. This provides the possibility of using the first communication channel operating in an optical frequency range (for example, realized by means of a high power LED present on the device, and a light-sensitive sensor, for example, a photodiode present on the integrated circuit) both for power supply of the integrated circuit and for data transmission between the device and the record carrier.

Optical discs with integrated circuits or chips are known from the prior art. German patent publication DE 195 06 313 A1 discloses a compact disc with a chip, in which the energy required for the chip is supplied by a device in the drive mechanism of the compact disc player. The compact disc is provided with a series arrangement of photodiodes and a LED, both of which communicate with the chip. The device is also provided with a series arrangement of photodiodes and a LED. Both the energy supply and the communication between the chip and the device can be ensured by the photodiodes and LEDs. Since the compact disc also comprises a series arrangement of photodiodes and a LED in addition to a chip, the production of the compact disc will be more complicated and more expensive.

US 5,652,838 discloses a CD-ROM with a chip, in which the CD-ROM comprises light-sensitive sensors. The CD-ROM also comprises a battery for power supply of the chip. Since the CD-ROM, in addition to the chip and the battery, also comprises a plurality of light-sensitive sensors and connections for connecting these sensors to the chip, the production of the compact disc will be more complicated and more expensive.

US 5,862,117 discloses a compact disc with a chip, in which the compact disc has an antenna which communicates with the chip for communication between the chip and a receiver situated in the compact disc player. In addition to the chip and the antenna, the compact disc also has connections for connecting the turns of the coil to the chip. This renders the production of the compact disc complicated and expensive.

In the drawings:
Fig. 1 shows diagrammatically a record carrier according to the invention,
Fig. 2 shows diagrammatically a reading device according to the invention,
Fig. 3 shows an embodiment of a system according to the invention.

Corresponding elements in the different Figures have identical reference numerals.

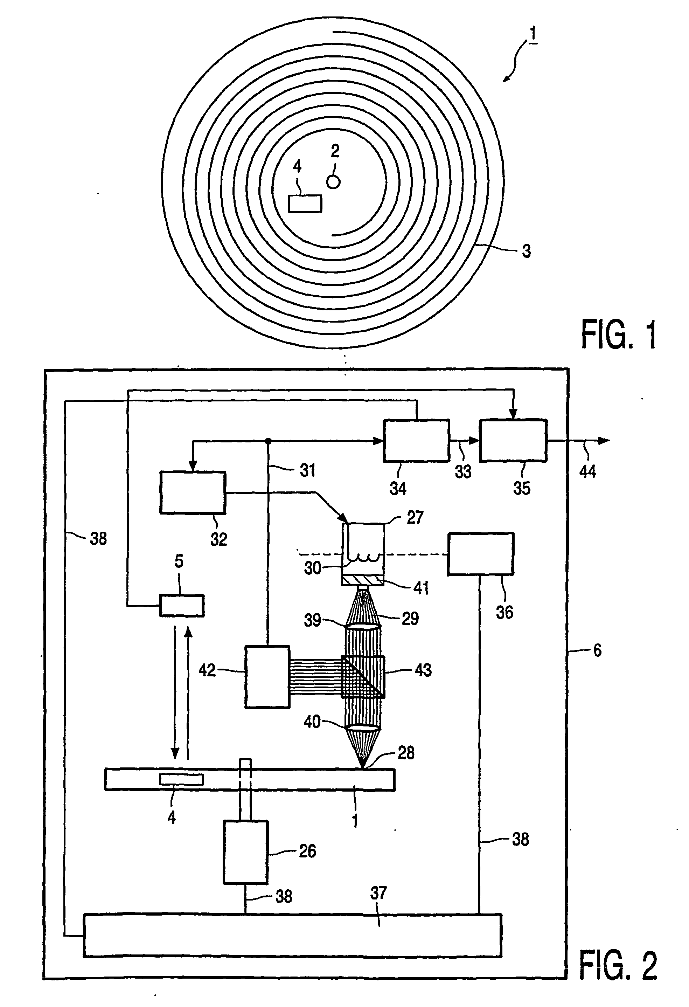

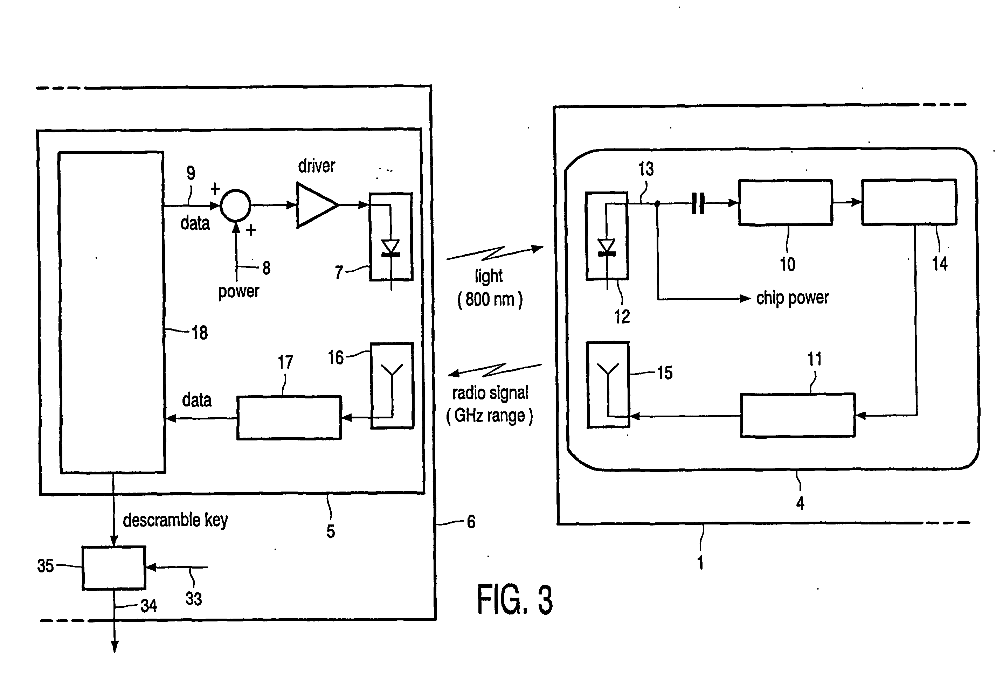

Fig. 1 shows a concentric record carrier 1 which may comprise information, with a central aperture 2 and a track 3. The track 3 is arranged in a spiral or concentric pattern and comprises a first area for storing information. A second area 4 is also present on the record carrier 1, the second area comprising an integrated circuit with transmitting means and receiving means for transmitting and receiving additional information. For suitable transmitting means and receiving means, see Fig. 3 and its explanation.

Fig: 2 shows a device 6 which is adapted to read the record carrier 1. The device 6 is equipped with drive means 26 for rotating the record carrier 1, and a read head 27 for reading the track 3 on the record carrier. The read head 27 comprises an optical system of a known type, intended to generate a light spot 28 to be focused on the track of the record carrier by means of a light ray 29 which is guided by optical elements such as a collimator lens 39 for collimating the light ray and an objective lens 40 for focusing the light ray. This light ray 29 is generated by a radiation source 41, for example, an infrared laser diode having a wavelength of 780 nm and an optical power of 3 mW. The read head 27 further comprises an actuator for focusing the light ray 29 on the record carrier and a tracking actuator 30 for fine-positioning the light spot 28 in the radial direction in the center of the track. Following the track by means of the laser beam may also be effected by varying the position of the objective lens 40. After having been reflected by the record carrier, the light ray 29 is detected by a detector 42 of a known type, for example, a quadrant detector and generates detector signals 31 such as, for example, a read signal, a tracking error signal and a focusing error signal. Use may be made of, for example, a beam-splitting cube 43, a polarizing beam-splitting cube, a pellicle or a retarder. The device 6 has tracking means 32 which are coupled to the read head 27 for receiving the tracking error signal from the read head 27 and for controlling the tracking actuator 30. During reading, the read signal is converted into output information in the read means 34, which is indicated by an arrow 33. The read means 34 comprise, for example, a channel decoder for converting the detected channel words into source words, and an error corrector for correcting errors which are present in the read signal. The device 6 further comprises positioning means 36 for coarse positioning of the read head 27 in the radial direction of the track, and a system control unit 37 for receiving commands from a controlling computer system or from a user, and for controlling the device by means of control lines 38, for example, a system bus connected to the drive means 26, the positioning means 36, the tracking means 32 and the read means 34. To this end, the system control unit 37 comprises a control circuit, for example, a microprocessor, a program memory and control gates for performing the procedures as described below. The system control unit 37 may also be implemented in a state machine in logic circuits.

The device 6 further comprises receiving and transmitting means 5 for receiving and transmitting additional information stored in the integrated circuit which is present in the second area 4 on the record carrier 1. In a preferred embodiment, this additional information comprises a key for scrambling and/or descrambling the information. This descramble key is added to descrambling means 35. The scrambled output information 33 is subsequently descrambled in these descrambling means and subsequently passed on, which is indicated by an arrow 44. This descrambled information may comprise, for example, audio or video information which may be displayed on an appropriate apparatus. It should be noted that the terms scrambling and descrambling of information are also understood to mean encrypting and decrypting. In fact, it will be evident to those skilled in the art that there is no fundamental difference between scrambling and encrypting information. In this embodiment, the information is first converted into source words and error-corrected in the read means 34, and subsequently descrambled in the descrambling means 35. However, the invention is not limited to this sequence. Those skilled in the art will understand that this sequence can also be reversed. For suitable transmitting means and receiving means, see Fig. 3 and its explanation. In a preferred embodiment of the device according to the invention, the device also comprises write means for providing optically readable signs on the record carrier 1. In this case, the record carrier must of course be a writable record carrier such as, for example, a CD-R disc or a DVD+RW disc.

In this embodiment of the device according to the invention, the device comprises detection means (such as, for example, the detector 42 and the read means 34) for detecting optically readable signs representing the information on the record carrier 1. In another embodiment of the device according to the invention, the device comprises only receiving and transmitting means 5 for reading and receiving additional information stored in the integrated circuit which is present in the second area 4 on the record carrier 1. In this case, the information on the record carrier will have to be detected by a separate device.

Fig. 3 shows an embodiment of the system according to the invention. In this embodiment, the optical transfer of energy 8 and data 9 to the integrated circuit 4', present on the record carrier 1, takes place via a light-emitting diode (LED) 7 which is present in the receiving and transmitting means 5 of the device 6. The light coming from the LED 7 is collected by a photodiode 12 on the integrated circuit 4'. The energy for power supply of the integrated circuit on the record carrier is obtained from the signal 13 coming from the photodiode 12. The signal 13 is also applied to detector 10. The detector is adapted to receive additional information from the device. This additional information is used in a copy protection algorithm 14. In a preferred embodiment, this copy protection algorithm is used for generating, under the influence of the received additional information, a descrambling key for descrambling the information on the record carrier. This descrambling key may be subsequently applied to a radio transmitter 11 which can subsequently transmit this key to the device 6 through an antenna 15. The device comprises a radio receiver 17 for receiving the key through an antenna 16. This key may be subsequently applied to a copy protection algorithm 18 which is present in the receiving and transmitting means 5. The key may be subsequently applied to the descrambling means 35 for descrambling the information from the record carrier.

Since the transmitting means and receiving means in the second area 4 are integrated in the integrated circuit 4' and since no external contacts need to be present on the device 6, because the communication between the device and the record carrier 1 takes place without contact, the production costs can be reduced and the production can be simplified. This embodiment has the further advantage that the communication between the integrated circuit and the device can also be established when the disc is in motion, i.e. rotates. This embodiment has the further advantage that the transfer of energy for the power supply of the integrated circuit (in this case by means of the LED 7 and the photodiode 12) appears to be relatively simple, in any case simpler than energy transfer by means of a radio transmitter/receiver combination. It has also been found that the incorporation of the radio transmitter 11 on the chip is more advantageous as regards energy consumption than the incorporation of a light source, for example a LED.

As has been explained hereinbefore, information is exchanged via a bidirectional communication channel between the medium to be protected (the record carrier 1) and the fixed world (the reading device 6) so as to achieve copy protection of the information on the record carrier. By means of the copy protection algorithms 14 and 18, which are available on both sides, this communication channel is secured, whereafter the descrambling key is safely passed on from the record carrier to the device. Such a bidirectional channel with the record carrier may therefore be realized by incorporating an integrated circuit in a record carrier and by communicating with this integrated circuit from the fixed world. From this fixed world, for example, the playback device or writing device of a compact disc player, the required power is sent via an optical channel to the integrated circuit in or on the disc, for example, by means of a high-power LED. The additional information is modulated on this signal from the decoder copy protection algorithm. This additional information is applied to the detector 10 on the integrated circuit. This detector detects the additional information which is subsequently processed in the copy protection algorithm 14. The descrambling key is subsequently transmitted in a safe manner (for example, by scrambling the descrambling key with a key present in the device, for example, a private key) via a high frequency radio signal to the receiving and transmitting means 5 of the device 6. These means comprise a radio receiver 17 with an antenna 16 which detects this signal and passes it on to the copy protection algorithm 18.

It will be evident from the foregoing that the system according to the invention has the following advantages:
- it can be realized at low cost due to the absence of external connections,
- it can be easily used in optical record carriers, i.e. without complicating the manufacture of the record carriers,
- simple changes in the existing reading devices provide the possibility of communicating in the manner described above.

The invention further relates to a method of manufacturing a record carrier. This method comprises the steps of:
- receiving information (in this step, the information to be provided on the record carrier is received; this information is represented by channel words obtained by encoding source words in a predetermined manner by means of a channel code, for example, the channel code EFM as is used in CD-Audio, or the channel code EFM+ as is used in DVD); ,
- providing the information on the record carrier (in this step, the information is provided on the record carrier, for example, the record carrier 1 as described with reference to Fig. 1);
- providing an integrated circuit on the record carrier, which integrated circuit comprises transmitting means and receiving means for transmitting and receiving additional information (in this step, the record carrier is provided with an integrated circuit; as explained above, this provides the possibility of realizing a record carrier in a relatively inexpensive way, and, by using additional information in the integrated circuit, it will be possible to protect the information on the record carrier from unwanted copying).

Although the invention has been elucidated with reference to the embodiments described above, it will be evident that other embodiments may be alternatively applied to achieve the same object. The invention is not limited to LEDs as light sources but may also be used with lasers or even sunlight as a light source. The record carrier is, for example, not limited to optical record carriers such as CD discs or DVD discs. The invention may be used for any type of record carrier. The reading device is thus neither limited to reading devices for reading optical record carriers. The invention may also be used in car keys, credit cards, identification tags and all kinds of devices in which identification of the user of the device plays a role and in which these devices comprise an area for storing the information to be protected from unauthorized copying.

## Claims

1. A record carrier (1) having a first area (3) for storing information, and a second area (4), the second area comprising an integrated circuit (4'), **characterized in that** transmitting means (11,15) for transmitting additional information and receiving means (10, 12) for receiving a power supply signal for power supply of the integrated circuit are integrated in the integrated circuit, the receiving means comprising a light-sensitive sensor, for example, a photodiode (12), and **in that** the integrated circuit (4') comprises means (12) for generating a first communication channel operating at a first frequency, and means (15) for generating a second communication channel operating at a second frequency, the first frequency being substantially unequal to the second frequency.

2. A record carrier as claimed in claim 1, **characterized in that** the receiving means (10, 12) are also adapted to receive additional information.

3. A record carrier as claimed in claim 1 or 2, **characterized in that** the integrated circuit (4') is contactlessly readable.

4. A record carrier as claimed in claim 1, 2 or 3, **characterized in that** the additional information comprises a key for scrambling and/or descrambling the information.

5. A record carrier as claimed in claim 4, **characterized in that** the integrated circuit comprises a memory in which the additional information is stored.

6. A record carrier as claimed in claim 1, **characterized in that** the record carrier is a pre-recorded record carrier.

7. A record carrier as claimed in claim 1, **characterized in that** the first frequency is in an optical frequency range and the second frequency is in a radio frequency range.

8. A system for protecting information on a record carrier (1), the system comprising a device (6) for reading and/or writing the information on the record carrier, and the record carrier (1), the device comprising transmitting means (7) and receiving means (16) for transmitting and receiving additional information, the record carrier comprising transmitting means (11, 15) for transmitting additional information and receiving means (10, 12) for receiving a power supply signal for power supply of the integrated circuit, **characterized in that** the transmitting means (11, 15) and receiving means (10, 12) of the record carrier are integrated in an integrated circuit (4'), and the receiving means (10, 12) of the record carrier comprise a light-sensitive sensor, for example, a photodiode (12), and **in that** the integrated circuit (4') comprises means (12) for generating a first communication channel operating at a first frequency, and means (15) for generating a second communication channel operating at a second frequency, the first frequency being substantially unequal to the second frequency.

9. A system as claimed in claim 8, **characterized in that** the receiving means (10, 12) of the record carrier are also adapted to receive additional information.

10. A system as claimed in claim 8 or 9, **characterized in that** the integrated circuit is contactlessly readable.

11. A system as claimed in claim 8, 9 or 10, **characterized in that** the device comprises an optical transmitter, for example, a LED (7), and a radio receiver (17), and the integrated circuit (4') comprises a light-sensitive sensor, for example, a photodiode (12), and a radio transmitter (11).

12. A system as claimed in claim 8, 9, 10 or 11, **characterized in that** the first communication channel is adapted for power supply of the integrated circuit and for data transmission.

13. A system as claimed in claim 8, **characterized in that** the additional information comprises an encryption algorithm for safety protection of the communication channels.

14. A device for reading a record carrier (1) as claimed in any one of claims 1 to 7, which device (6) comprises detection means (42) for detecting optically readable signs representing the information, **characterised by** further comprising receiving means (16) and transmitting means (7) for reading and receiving additional information stored in the integrated circuit (4'), means (7) for generating a first communication channel operating at a first frequency, and means (16) for generating a second communication channel operating at a second frequency, the first frequency being substantially unequal to the second frequency.

15. A device as claimed in claim 14, wherein the device comprises write means for providing optically readable signs on a recordable record carrier.

16. An integrated circuit (4') comprising transmitting means (11, 15) for transmitting additional information, and receiving means (10, 12) for receiving a power supply signal for power supply of the integrated circuit, the receiving means comprising a light-sensitive sensor, for example, a photodiode (12), further comprising means (12) for generating a first communication channel operating at a first frequency, and means (15) for generating a second communication channel operating at a second frequency, the first frequency being substantially unequal to the second frequency.

17. An integrated circuit as claimed in claim 16, wherein the receiving means (10, 12) are also adapted to receive additional information.

## Patentansprüche

1. Aufzeichnungsträger (1) mit einem ersten Gebiet (3) zur Speicherung von Information, und mit einem zweiten Gebiet (4), wobei das zweite Gebiet eine integrierte Schaltung (4') aufweist, **dadurch gekennzeichnet, dass** Übertragungsmittel (11, 15) zum Übertragen zusätzlicher Information, und Empfangsmittel (10, 12) zum Empfangen eines Speisesignals zur Speisung der integrierten Schaltung in der integrierten Schaltung integriert sind, wobei die Empfangsmittel einen lichtempfindlichen Sensor aufweisen, beispielsweise eine Photodiode (12), und dass die integrierte Schaltung (4') Mittel (12) aufweist zum Erzeugen eines ersten Kommunikationskanals, der mit einer ersten Frequenz arbeitet, und Mittel (15) zum Erzeugen eines zweiten Kommunikationskanals, der mit einer zweiten Frequenz arbeitet, wobei die erste Frequenz wesentlich anders ist als die zweite Frequenz.

2. Aufzeichnungsträger nach Anspruch 1, **dadurch gekennzeichnet, dass** die Empfangsmittel (10, 12) ebenfalls dazu vorgesehen sind zusätzliche Information zu empfangen.

3. Aufzeichnungsträger nach Anspruch 1 oder 2, **dadurch gekennzeichnet, dass** die integrierte Schaltung (4') kontaktlos auslesbar ist.

4. Aufzeichnungsträger nach Anspruch 1, 2 oder 3, **dadurch gekennzeichnet, dass** die zusätzliche Information einen Schlüssel aufweist zum Verschlüsseln und/oder Entschlüsseln der Information.

5. Aufzeichnungsträger nach Anspruch 4, **dadurch gekennzeichnet, dass** die integrierte Schaltung einen Speicher aufweist, in dem die zusätzliche Information gespeichert ist.

6. Aufzeichnungsträger nach Anspruch 1, **dadurch gekennzeichnet, dass** der Aufzeichnungsträger ein bespielter Aufzeichnungsträger ist.

7. Aufzeichnungsträger nach Anspruch 1, **dadurch gekennzeichnet, dass** die erste Frequenz ein optischer Frequenzbereich ist und die zweite Frequenz ein Hochfrequenzbereich ist.

8. System zum Schützen von Information auf einem Aufzeichnungsträger (1), wobei das System eine Anordnung (6) aufweist zum Auslesen und/oder Schreiben der Information auf dem Aufzeichnungsträger, und den Aufzeichnungsträger (1), wobei die Anordnung Übertragungsmittel (7) und Empfangsmittel (16) aufweist zum Übertragen bzw. Empfangen zusätzlicher Information, wobei der Aufzeichnungsträger Übertragungsmittel (11, 15) aufweist zum Übertragen zusätzlicher Information und Empfangsmittel (10, 12) zum Empfangen eines Speisesignals zur Speisung der integrierten Schaltung, **dadurch gekennzeichnet, dass** die Übertragungsmittel (11, 15) und die Empfangsmittel (10, 12) des Aufzeichnungsträgers in einer integrierten Schaltung (4') integriert sind, und die Empfangsmittel (10, 12) des Aufzeichnungsträgers einen lichtempfindlichen Sensor, beispielsweise eine Photodiode (12) aufweisen, und dass die integrierte Schaltung (4') Mittel (12) zum Erzeugen eines ersten Kommunikationskanals aufweist, der auf einer ersten Frequenz arbeitet, und Mittel (15) zum Erzeugen eines zweiten Kommunikationskanals, der auf einer zweiten Frequenz arbeitet, wobei die erste Frequenz wesentlich anders ist als zweite Frequenz.

9. System nach Anspruch 8, **dadurch gekennzeichnet, dass** die Empfangsmittel (10, 12) des Aufzeichnungsträgers ebenfalls zum Empfangen von zusätzlicher Information vorgesehen sind.

10. System nach Anspruch 8 oder 9, **dadurch gekennzeichnet, dass** die integrierte Schaltung kontaktlos auslesbar ist.

11. System nach Anspruch 8, 9 oder 10, **dadurch gekennzeichnet, dass** die Anordnung einen optischen Sender aufweist, beispielsweise eine LED (7), und einen Funkempfänger (17), und die integrierte Schaltung (4') einen lichtempfindlichen Sensor, beispielsweise eine Photodiode (12) und einen Funksender (11) aufweist.

12. System nach Anspruch 8, 9, 10 oder 11, **dadurch gekennzeichnet, dass** der erste Kommunikationskanal dazu vorgesehen ist, die integrierte Schaltung zu speisen und zur Datenübertragung.

13. System nach Anspruch 8, **dadurch gekennzeichnet, dass** die zusätzliche Information einen Verschlüsselungsalgorithmus zum Sicherheitsschutz der Kommunikationskanäle enthält.

14. Anordnung zum Auslesen eines Aufzeichnungsträgers (1) nach einem der Ansprüche 1 bis 7, wobei diese Anordnung (6) Detektionsmittel (42) aufweist zum Detektieren optisch auslesbarer Zeichen, welche die Information darstellen, **dadurch gekennzeichnet, dass** sie weiterhin Empfangsmittel (16) Sendemittel (7) aufweist zum Auslesen bzw. Empfangen zusätzlicher Information, die in der integrierten Schaltung (4') gespeichert ist, Mittel (7) zum Erzeugen eines ersten Kommunikationskanals, der auf einer ersten Frequenz arbeitet, und Mittel (16) zum Erzeugen eines zweiten Kommunikationskanals, der auf einer zweiten Frequenz arbeitet, wobei die erste Frequenz wesentlich anders ist als die zweite Frequenz.

15. Anordnung nach Anspruch 14, wobei die Anordnung Schreibmittel aufweist zum Schaffen optisch auslesbarer Zeichen auf einem aufzeichenbaren Aufzeichnungsträger.

16. Integrierte Schaltung (4') mit Übertragungsmitteln (11, 15) zum Übertragen zusätzlicher Information, und mit Empfangsmitteln (10, 12) zum Empfangen eines Speisesignals zur Speisung der integrierten Schaltung, wobei die Empfangsmittel einen lichtempfindlichen Sensor, beispielsweise eine Photodiode (12) enthalten, weiterhin mit Mitteln (12) zum Erzeugen eines ersten Kommunikationskanals, der auf einer ersten Frequenz arbeitet, und mit Mitteln (15) zum Erzeugen eines zweiten Kommunikationskanals, der auf einer zweiten Frequenz arbeitet, wobei die erste Frequenz wesentlich anders ist als die zweite Frequenz.

17. Integrierte Schaltung nach Anspruch 16, wobei die Empfangsmittel (10, 12) ebenfalls dazu vorgesehen sind, zusätzliche Information zu empfangen.

## Revendications

1. Support d'enregistrement (1) ayant une première zone (3) pour stocker des informations et une seconde zone (4), la seconde zone comprenant un circuit intégré (4'), **caractérisé en ce que** les moyens de transmission (11, 15) pour transmettre des informations additionnelles et des moyens de réception (10, 12) pour recevoir un signal d'alimentation pour l'alimentation du circuit intégré sont intégrés dans le circuit intégré, les moyens de réception comprenant un capteur sensible à la lumière, par exemple, une photodiode (12), et **en ce que** le circuit intégré (4') comprend des moyens (12) pour générer une première voie de communication fonctionnant à une première fréquence et des moyens (15) pour générer une seconde voie de communication fonctionnant à une seconde fréquence, la première fréquence étant sensiblement peu égale à la seconde fréquence.

2. Support d'enregistrement selon la revendication 1, **caractérisé en ce que** les moyens de réception (10, 12) sont également adaptés à recevoir des informations additionnelles.

3. Support d'enregistrement selon la revendication 1 ou 2, **caractérisé en ce que** le circuit intégré (4') est lisible d'une manière exempte de contact.

4. Support d'enregistrement selon la revendication 1, 2 ou 3, **caractérisé en ce que** les informations additionnelles comprennent une clé pour embrouiller et/ou pour désembrouiller les informations.

5. Support d'enregistrement selon la revendication 4, **caractérisé en ce que** le circuit intégré comprend une mémoire dans laquelle les informations additionnelles sont stockées.

6. Support d'enregistrement selon la revendication 1, **caractérisé en ce que** le support d'enregistrement est un support d'enregistrement préenregistré.

7. Support d'enregistrement selon la revendication 1, **caractérisé en ce que** la première fréquence est une gamme de fréquences optiques et **en ce que** la seconde fréquence est une gamme de radiofréquences.

8. Système pour protéger des informations sur un support d'enregistrement (1), le système comprenant un dispositif (6) pour lire et/ou pour écrire les informations sur un support d'enregistrement, et le support d'enregistrement (1), le dispositif comprenant des moyens de transmission (7) et des moyens de réception (16) pour transmettre et pour recevoir des informations additionnelles, le support d'enregistrement comprenant des moyens de transmission (11, 15) pour transmettre des informations additionnelles et des moyens de réception (10, 12) pour recevoir un signal d'alimentation pour l'alimentation du circuit intégré, **caractérisé en ce que** les moyens de transmission (11, 15) et les moyens de réception (10, 12) du support d'enregistrement sont intégrés dans un circuit intégré (4') et **en ce que** les moyens de réception (10, 12) du support d'enregistrement comprennent un capteur sensible à la lumière, par exemple, une photodiode (12), et **en ce que** le circuit intégré (4') comprend des moyens (12) pour générer une première voie de communication fonctionnant à une première fréquence et **en ce que** les moyens (15) pour générer une seconde voie de communication fonctionnant à une seconde fréquence, la première fréquence étant sensiblement peu égale à la seconde fréquence.

9. Système selon la revendication 8, **caractérisé en ce que** les moyens de réception (10, 12) du support d'enregistrement sont également adaptés à recevoir des informations additionnelles.

10. Système selon la revendication 8 ou 9, **caractérisé en ce que** le circuit intégré est lisible d'une manière exempte de contact.

11. Système selon la revendication 8, 9 ou 10, **caractérisé en ce que** le dispositif comprend un émetteur optique, par exemple, une DEL (7) et un récepteur radioélectrique (17), et **en ce que** le circuit intégré (4') comprend un capteur sensible à la lumière, par exemple, une photodiode (12) et un émetteur radioélectrique (11).

12. Système selon la revendication 8, 9, 10 ou 11, **caractérisé en ce que** la première voie de communication est adaptée à alimenter le circuit intégré et à transmettre des données.

13. Système selon la revendication 8, **caractérisé en ce que** les informations additionnelles comprennent un algorithme de cryptage pour la protection de sécurité des voies de communication.

14. Dispositif pour lire un support d'enregistrement (1) selon l'une quelconque des revendications précédentes 1 à 7, lequel dispositif (6) comprend des moyens de détection (42) pour détecter des signes optiquement lisibles qui représentent les informations, **caractérisé en ce qu'**il comprend encore des moyens de réception (16) et des moyens de transmission (7) pour lire et pour recevoir des informations additionnelles qui sont stockées dans le circuit intégré (4'), des moyens (7) pour générer une première voie de communication fonctionnant à une première fréquence et des moyens (16) pour générer une seconde voie de communication fonctionnant à une seconde fréquence, la première fréquence étant sensiblement peu égale à la seconde fréquence.

15. Dispositif selon la revendication 14, dans lequel le dispositif comprend des moyens d'écriture pour appliquer des signes optiquement lisibles sur un support d'enregistrement enregistrable.

16. Circuit intégré (4') comprenant des moyens de transmission (11, 15) pour transmettre des informations additionnelles et des moyens de réception (10, 12) pour recevoir un signal d'alimentation pour l'alimentation du circuit intégré, les moyens de réception comprenant un capteur sensible à la lumière, par exemple, une photodiode 12), comprenant encore des moyens (12) pour générer une première voie de communication fonctionnant à une première fréquence et des moyens (15) pour générer une seconde voie de communication fonctionnant à une seconde fréquence, la première fréquence étant sensiblement peu égale à la seconde fréquence.

17. Circuit intégré selon la revendication 16, dans lequel les moyens de réception (10, 12) sont également adaptés à recevoir des informations additionnelles.
